# EUROPEAN PATENT APPLICATION

(11) **EP 2 832 495 A1**
(43) Date of publication of application: **04.02.2015**
(21) Application number: 13768185.4
(22) Date of filing: 08.03.2013
(51) Int. Cl.: B24B 5/36, B29D 30/54, B29D 30/58, B29D 30/68

(54) **TYRE-RETREADING SYSTEM CONSTITUTED BY A ROBOTIZED ARM WITH ANGULAR INTERPOLATION MOVEMENTS**

(30) Priority: 26.03.2012 BR 102012003723
(71) Applicant: Möller, Lucas, 93030-250 São Leopoldo RS (BR)
(72) Inventor: Möller, Lucas, 93030-250 São Leopoldo RS (BR)
(74) Representative: Dennemeyer & Associates S.A.
(86) International application number: PCT/BR2013/000070
(87) International publication number: WO 2013/142931

(57) **Abstract**

Tyre-retreading system constituted by a robotized arm with angular interpolation movements with the aim of providing a modular machine capable of allowing greater amplitude of movements on the part of the scraping tool (5) and/or rubber-applying tool (11), which is installed at the end of a robotized arm (1) controlled via a control panel and provided with at least three articulations (2, 3, 4); the tools (5, 11) act on a tyre (7) supported by a mandrel system (6, 10).

## Description

### Technical Field

Generally, this invention belongs to the field of tyres, and more specifically concerns a system for retreading, as well as application of rubber to tyres, carried out by a robotic arm capable of carrying out angular interpolation movements.

### Prior Art

Devices for remoulding tyres in which the tyre is generally arranged vertically on a rotary, translatively fixed mandrel, are known from the prior art. The tools currently used have a scraper that carries out the rough grinding of the tyre with axial and radial movements. The known devices generally have linear tables having spindles, linear guides, and cylindrical guides responsible for the movement of the scraping or rubber-applying assembly as a whole. As proposed in US 6251204, the mandrel supporting the tyre to be processed is affixed on a first cart guided on rails, and the tools are coupled to a second cart, also on rails, which are orientated parallel to the rotational axis of the mandrel. These devices, as seen in AU1528470, carry out movements bringing the tyre nearer to or farther from the axis of the mandrel, as well as radial movements of the scraping device via guide rails. The model proposed by patent US 7040371 also illustrates these typical devices, in which the movements occur on perpendicular axes by means of parallel guides actuated by a spherical spindle. The scraping tool may rotate around the vertical axis, and a control unit may monitor an operational parameter of the device, adjusting the functional characteristics of the scraping device and the support of the tyre being processed. The device may be operated by a control station via an interface with the control unit. The type of system presented in the aforementioned patents has the disadvantage of premature wear of the spindles, linear guides, and cylindrical guides caused by the contamination of these components with rubber particles and dust resulting from the tyre scraping process. Additionally, these devices limit access to the tyres by other tools.

Some devices using the concept of linear tables also have problems accompanying the change in dimension of the tyre given that they are not structured to support a tyre of greater weight and size, which results in vibration and stability issues. Model PI0102947-9, which also uses the concept of linear tables, proposes a scalable solution for this type of problem, having at least two associated structures, each of which has guide rails responsible for the movement of the structures, and using two motors to actuate them. The guide rails of the first structure, which supports the tyre, must be arranged on the rotational axis of the mandrel and symmetrically related to the vertical plane containing this axis. There is no risk of deformation or vibration of the mandrel due to the high weight of a tyre, because its centre of mass is maintained on a single axis, and because the provision of symmetrical rails ensures stability on the line of the centre of mass. The invention further allows for the use of a third structure arranged on the opposite side of the scraper. Because the structures are heavy, high-power motors are required to move them, and a third cart must be used, resulting in the use of a third motor, which results in greater energy consumption and an unattractive cost-benefit ratio of the system proposed by the model.

### Novel Aspects and Objectives of the Invention

In order to address the disadvantages known from the prior art, this invention concerns a robotic arm for the retreading of tyres, which establishes the trajectory of the movements of the rough grinding and rubber application tools by means of articulated arms that are actuated automatically, with at least three articulations supported on pillow blocks. The articulated arms allow for unlimited movement of the tool to be used by the system at much higher speed and with much greater precision, allowing widely varied combinations of shapes and profiles to be processed.

The invention proposed seeks to provide a scalable device capable of allowing for a greater range of movements of the tool incorporated into the system. By increasing the range of movements, the robotic arm is able to act on various tyres positioned separately, thus reducing the total operational cycle time and the number of starts of the main motor of the scraping tool, which considerably reduces the energy consumption of the process and provides an attractive cost-benefit ratio to the user.

The use of the robotic arm eliminates the need for linear tables, allowing for the elimination of the linear guides, cylindrical guides, spindle actuations, and linear actuators present in the conventional tyre-scraping devices. Without these items, the device does not require periodic lubrication of the components, and is thus environmentally sound. The system is characterised by angular movements allowing for larger tyre profiles, and further has the feature of accelerating the movement of the scraping tool, primarily displacing movements in which the tool does not touch the tyre. This also results in a reduction in the scraping time, even in assemblies operating with only one tyre.

Another technical advantage of combining greater range and precision of the movements of the robotic arm is the possibility of implementing an automatic system for sharpening the scraping tool for the tyres. This characteristic makes this routine much safer for the operator of the device, because it can be executed remotely by the operator because the robotic arm is controlled by the operator using software via a control panel. By eliminating the need for the operator to be in close proximity to the tool, particularly during the rough grinding of the tyre, a complete fairing can be produced for the device. This fairing makes the device much safer and allows the operator to remain protected from elements that may be thrown off during the process of scraping the tyres.

The arm may work with different tools and scraping devices for tyres such as saws, cups, blades, pads, etc., and also allows for the application of the robotic arm to various stages of the tyre retreading process (remoulding, reforming). Thus, what changes in the various possible applications for the robotic arm is the type of tool coupled to the system. As such, the system can work both on rough grinding and rubber removal, as well as applying a new layer of rubber to the tyre. The arm has a structure capable of supporting the various tools to be coupled to the system without deforming the device.

Additionally, the robotic arm involved may also be designed in various sizes in order to work with various tyre sizes available on the market, e.g., passenger automobile tyres, motorcycle tyres, lorry tyres, off-road/agricultural/OTR tyres, etc., and allows for a more compact solution that is more space-efficient when working on larger tyres.

### Description of Attached Drawings

For better understanding and execution of the invention by persons skilled in the art, the invention will be described clearly, concisely, and adequately by reference to the attached drawings listed below, which illustrate and support it:

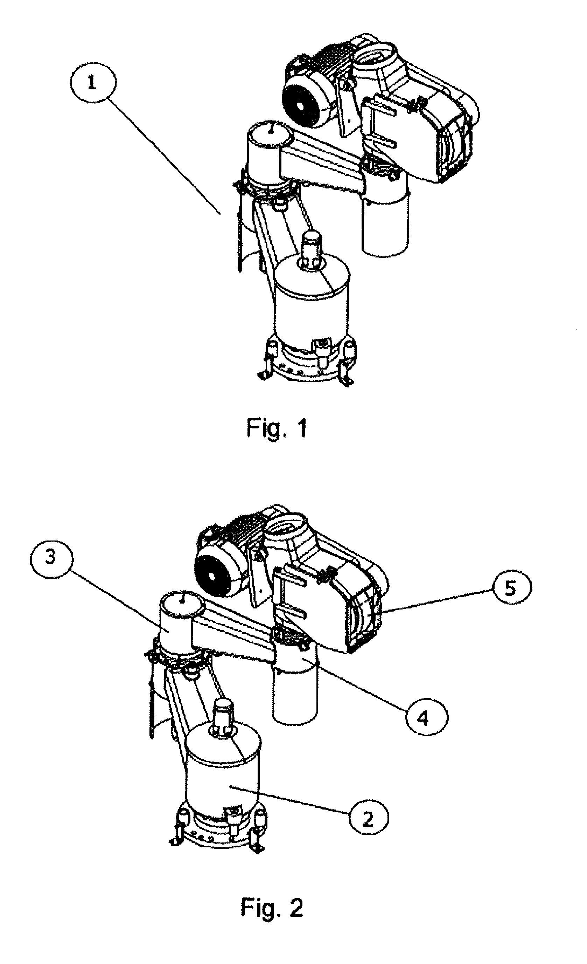

Fig. 1 is a perspective view of the robotic arm.
Fig. 2 is a perspective view of the robotic arm.

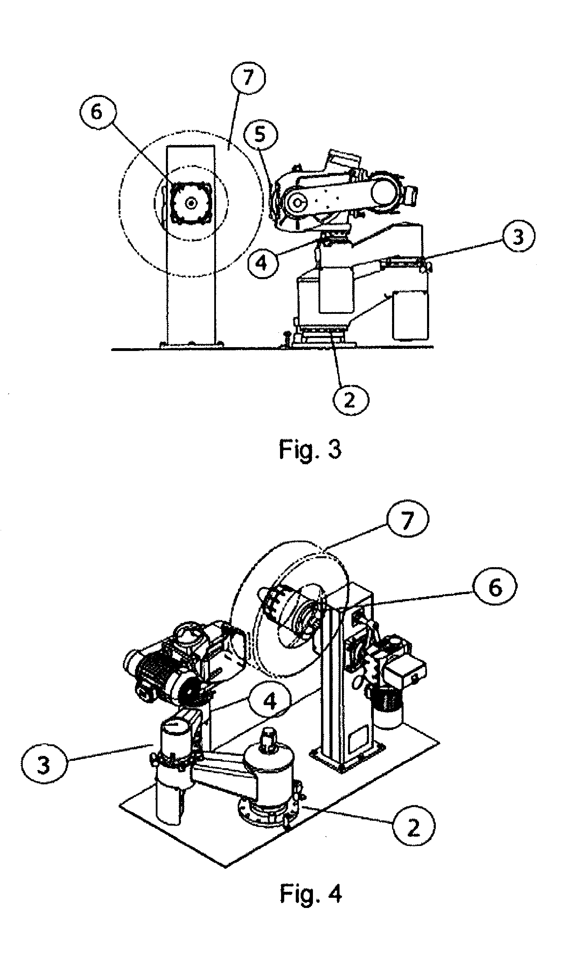

Fig. 3 is a side view of the tyre-scraping system having a rotary mandrel system.
Fig. 4 is a perspective view of the tyre-scraping system having a rotary mandrel system.

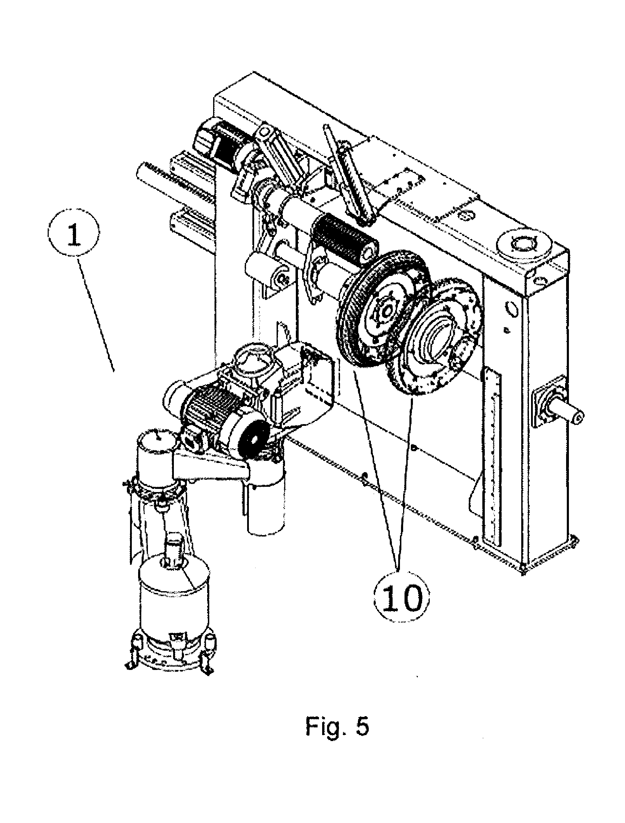

Fig. 5 is a perspective view of the tyre-scraping system having a group of plates for affixing the tyre.

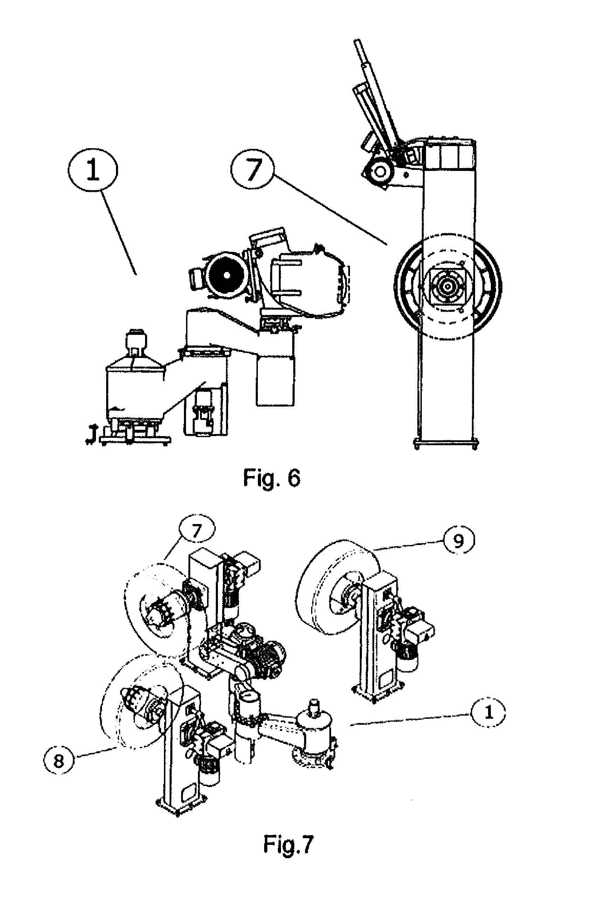

Fig. 6 is a side view of the tyre-scraping system having a group of plates for affixing the tyre.
Fig. 7 shows the robotic arm carrying out the scraping process on three tyres.

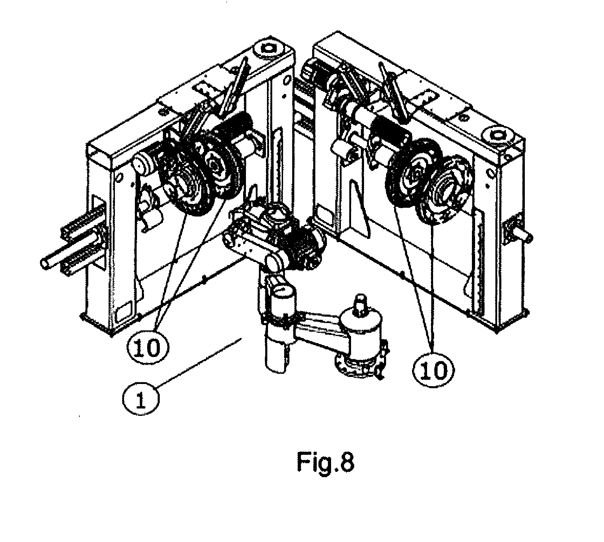

Fig. 8 shows the robotic arm carrying out the scraping process on two tyres.

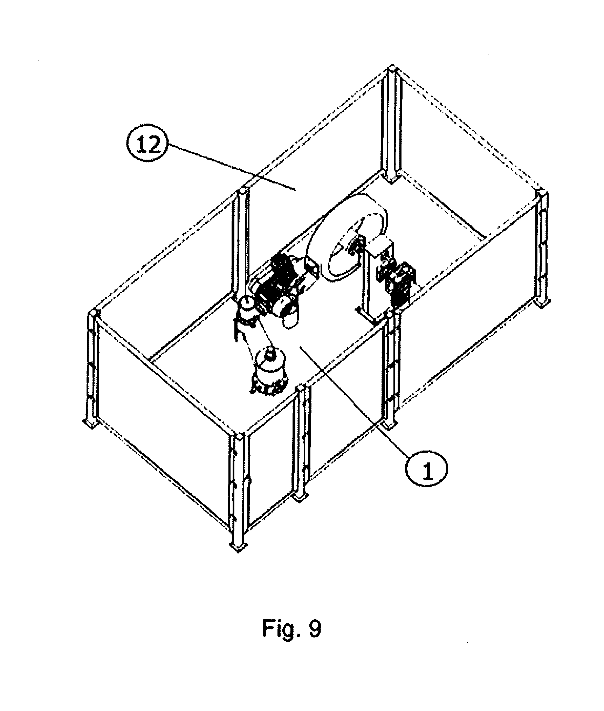

Fig. 9 shows the system with a tyre isolated by a fairing.

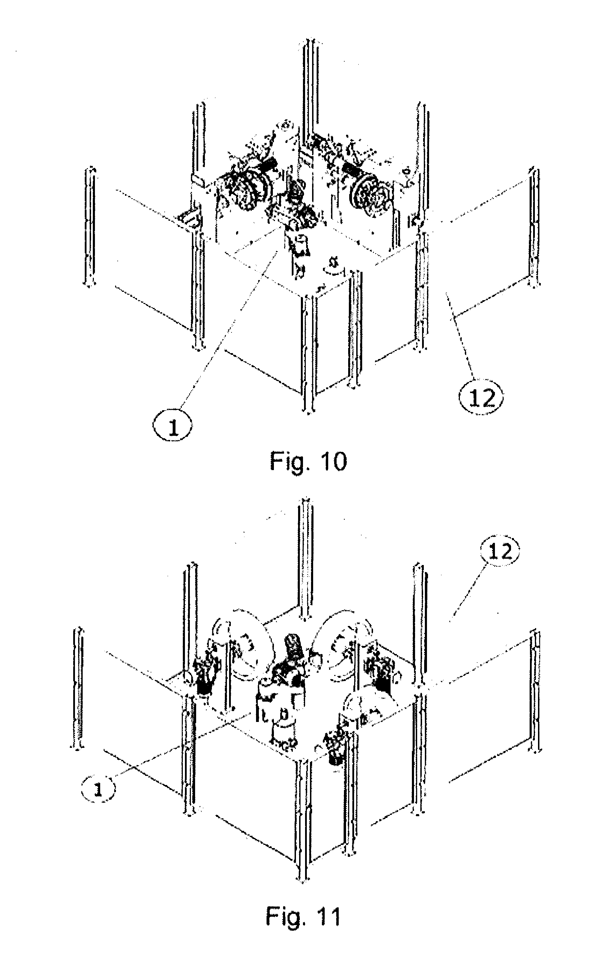

Fig. 10 shows the system with two tyres isolated by a fairing.
Fig. 11 shows the system with three tyres isolated by a fairing.

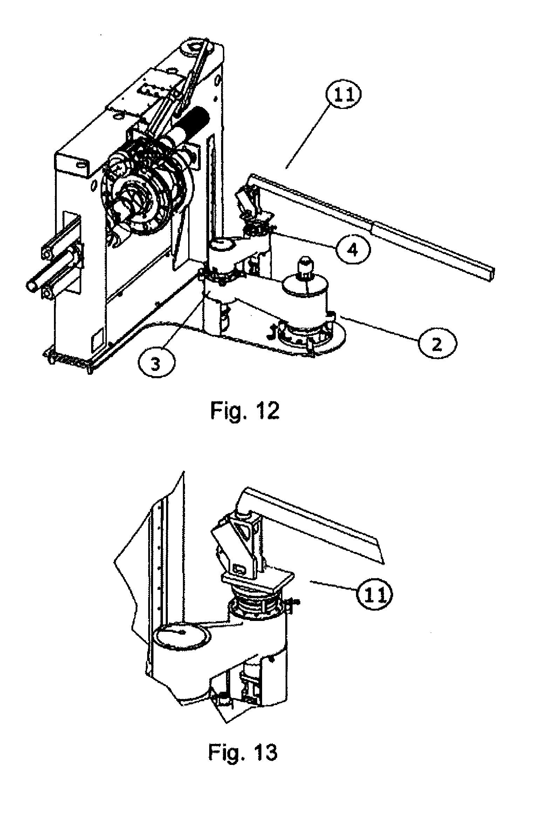

Fig. 12 shows the robotic arm with an incorporated tool for applying rubber.
Fig. 13 is a scale representation of the rubber-applying tool.

### Detailed Description of the Invention

As can be seen from the attached drawings, the arrangement of the parts of the device for retreading tyres disclosed herein consists of a mandrel system supporting the tyre (7) being processed. The system is characterised in that it further consists of at least one robotic arm (1), actuated automatically and controlled by software via a control panel, and having at least 3 joints (2), (3), (4) and a scraping tool (5) or a rubber applying tool (11).

The joints (2), (3), (4) allow for a greater range of motion of the tool coupled to the system. Thus, the robotic arm (1) is able to carry out angular interpolation movements, and can thus better adapt to the contour of the tyre (7). Because it allows for a greater range of movement, the robotic arm (1) may work on various tyres (7), (8), (9) separately, reducing the cycle time and the number of times the main motor of the tool is started. The robotic arm (1) further allows the system to carry out both the scraping and the application of rubber to the tyres. This is made possible by this combination of range and precision of movement. In order to carry out this application, additionally, a rubber-applying tool (11) also based on a robotic arm having at least 3 joints (2), (3), (4), such that what changes is the tool being used by the system.

The system is independent of the type of mandrel supporting the tyre because the tyre support and the robotic arm (1) are independent. Thus, both a system with a rotary mandrel (6) and a tyre fixation using plates (10), amongst others, may be used. Additionally, it is possible to implement a complete fairing (12) for the device in order to make the work routine safer for the operator.

The drawings and the description do not limit the embodiments of the invention proposed herein, but merely illustrate and facilitate an understanding of the conceptual innovations disclosed in this invention; as such, the descriptions and drawings must be construed as illustrations and not limitations. There may be other equivalent or analogous embodiments of the invention disclosed here in that do not leave the scope of the invention.

Described herein is a specific, original system for retreading tyres, capable of substantially improving its use, which is novel, inventive, sufficiently disclosed, and industrially applicable, and accordingly meets all of the essential requirements for the grant of the patent sought.

## Claims

1. System for retreading tyres consisting of a robotic arm that performs angular interpolation movements, **characterised in that** it consists of at least one robotic arm (1), containing at least three scalable joints (2), (3), (4).

2. System for retreading tyres consisting of a robotic arm that performs angular interpolation movements according to claim 1, further **characterised in that** the robotic arm (1) is actuated automatically.

3. System for retreading tyres consisting of a robotic arm that performs angular interpolation movements according to claim 1, further **characterised in that** the robotic arm (1) allows for angular interpolation movements.

4. System for retreading tyres consisting of a robotic arm that performs angular interpolation movements according to claims 1 and 3, further **characterised in that** the robotic arm (1) alternatively has different tools and scraping devices (5) for tyres.

5. System for retreading tyres consisting of a robotic arm that performs angular interpolation movements according to claims 1 and 3, further **characterised in that** the robotic arm (1) alternatively has a rubber-applying tool (11).

6. System for retreading tyres consisting of a robotic arm that performs angular interpolation movements according to claims 1 and 3, further **characterised in that** the robotic arm (1) carries out the steps of scraping and applying rubber to tyres.

7. System for retreading tyres consisting of a robotic arm that performs angular interpolation movements according to claims 1 and 3, further **characterised in that** it alternatively has a system for sharpening the tyre scraping tool.

8. System for retreading tyres consisting of a robotic arm that performs angular interpolation movements according to claims 1 and 3, further **characterised in that** the robotic arm (1) scrapes or applies rubber to tyres positioned separately (7), (8), (9).

9. System for retreading tyres consisting of a robotic arm that performs angular interpolation movements according to claims 1 and 3, further **characterised in that** it has a complete fairing (12) for the system.
